# EUROPÄISCHE PATENTSCHRIFT

(11) **EP 4 349 688 B1**
(45) Veröffentlichungstag und Bekanntmachung des Hinweises auf die Patenterteilung: **25.03.2026**
(21) Anmeldenummer: 23200054.7
(22) Anmeldetag: 27.09.2023
(51) Int. Cl.: B62D 1/184, B62D 1/19, B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 04.10.2022 BE 202205795
(43) Veröffentlichungstag der Anmeldung: 10.04.2024
(73) Patentinhaber: thyssenkrupp Presta Aktiengesellschaft, 9492 Eschen (LI); thyssenkrupp AG, 45143 Essen (DE)
(72) Erfinder: Igras, Adam, 9472 Grabs (CH); Schnitzer, Hieronymus, 9487 Gamprin (LI)
(74) Vertreter: thyssenkrupp Intellectual Property GmbH

(56) Entgegenhaltungen:
- JP-A- 2021 160 676
- JP-A- 2021 172 250

## Beschreibung

### Stand der Technik

Die Erfindung betrifft eine Lenksäule für ein Kraftfahrzeug, umfassend eine Stelleinheit, in der eine Lenkspindel um ihre in Längsrichtung erstreckte Längsachse drehbar gelagert ist und die in einer Trageinheit in Längsrichtung verstellbar aufgenommen ist, und umfassend eine Fixiereinrichtung und eine damit zusammenwirkende Begrenzungseinrichtung, wobei die Fixiereinrichtung einen an der Trageinheit drehbar gelagerten Spannbolzen aufweist, der durch Drehung wahlweise in eine Fixierstellung bringbar ist, in der die Stelleinheit relativ zur Trageinheit fixiert ist, oder in eine Lösestellung, in der die Stelleinheit relativ zur Trageinheit verstellbar ist, wobei die Begrenzungseinrichtung mindestens Begrenzungselement aufweist, das mit einem Anschlagabschnitt des Spannbolzens derart zusammenwirkt, dass in der Lösestellung der Anschlagabschnitt in eine Begrenzungsposition gebracht ist, in der er in Längsrichtung gegen ein Begrenzungselement anschlagbar ist, und dass in der Fixierstellung der Anschlagabschnitt in eine Durchgangsposition gebracht ist, in der er über das mindestens eine Begrenzungselement hinaus in Längsrichtung durchgehend verstellbar ist, wobei an der Stelleinheit ein Anschlagträger angebracht ist, der das Begrenzungselement aufweist.

Bei einer derartigen verstellbaren Lenksäule ist eine Längsverstellung der Lenkradposition des Lenkrads, das am fahrerseitigen, hinteren Ende der in der Stelleinheit um die Längsachse drehbar gelagerten Lenkspindel angebracht ist, dadurch realisiert, dass die Stelleinheit in Längsrichtung in der durch die Längsachse gegebenen Verstellrichtung relativ zu der an der Fahrzeugkarosserie festgelegten Trageinheit verstellbar ist.

Zur lösbaren Fixierung der Verstellposition ist eine Fixiereinrichtung vorgesehen, die einen an der Trageinheit gelagerten Spannbolzen aufweist, der entweder manuell mittels eines Spannhebels oder auch motorisch zur wahlweisen Einstellung einer Lösestellung oder einer Fixierstellung um seine Spannachse verdreht werden kann. Im Fahrbetrieb wird die Fixierstellung eingestellt, wobei die Stelleinheit zur Fixierung der Lenkradposition mit der Trageinheit verspannt ist, beispielsweise durch einen mit dem Spannbolzen zusammenwirkenden Hub- oder Spannmechanismus zwischen Seitenwangen der Trageinheit festgeklemmt wird. Zur Verstellung wird der Spannbolzen in die Lösestellung gedreht, wodurch die Verspannung aufgehoben wird, so dass die Stelleinheit samt Lenkrad relativ zur Trageinheit verstellt werden kann.

Der zur Verstellung maximal mögliche Verstellweg wird durch eine Begrenzungseinrichtung begrenzt, so dass die Stelleinheit bei der Längsverstellung nicht über vorgegebene Anschläge hinaus relativ zur Trageinheit verstellt werden kann, wenn sich die Fixiereinrichtung in Lösestellung befindet. Bei einem Crashfall, wenn ein Körper mit hoher Geschwindigkeit auf das Lenkrad aufprallt, wird die Haltekraft der in Fixierstellung festgelegten Fixiereinrichtung durch die dabei eingebrachte, hohe Crashkraft überwunden, und die Stelleinheit wird relativ zur Trageinheit nach vorn verschoben. Dabei kann zwischen der Stelleinheit und der Trageinheit eine Energieabsorptionseinrichtung vorgesehen sein, um eine bevorzugt möglichst gleichmäßige Abbremsung zu erzeugen.

Um in dem besagten Crashfall eine möglichst gleichmäßige Energieabsorption und eine Abbremsung in Verstellrichtung über einen möglichst langen Crashweg zu realisieren, ist es bekannt, eine sogenannte aktive Begrenzungseinrichtung vorzusehen, wie beispielsweise in der JP 2021 160676 A beschrieben ist.

Die bekannte Begrenzungseinrichtung weist zwei in Längsrichtung beabstandete Begrenzungselemente auf, die außen auf der Stelleinheit angeordnet sind und den möglichen Verstellweg begrenzen. Der in der Trageinheit drehbar gelagerte Spannbolzen weist einen unrunden Anschlagabschnitt auf, der in der Lösestellung eine Begrenzungsposition einnimmt, in der er in Längsrichtung gegen die Begrenzungselemente anschlagbar ist. In der Fixierposition wird der Anschlagabschnitt in eine Durchgangsposition gedreht, in der er die Begrenzungselemente passieren kann, so dass die Stelleinheit über die Begrenzungselemente hinaus in Längsrichtung relativ zur Trageinheit bewegbar ist. Dadurch wird in der Fixierstellung ein relativ zum Verstellweg längerer Crashweg ermöglicht.

Bei der vorbekannten Begrenzungseinrichtung sind die Begrenzungselemente direkt außen auf der Stelleinheit angeordnet. Nachteilig daran ist, dass im Bereich der Begrenzungseinrichtung kein Bauraum zur Integration einer Energieabsorptionseinrichtung zwischen Trageinheit und Stelleinheit zur Verfügung steht. Dadurch wird ein größerer Bauraum beansprucht, und die konstruktiven Möglichkeiten sind eingeschränkt.

Ein weiterer Nachteil der bekannten Anordnung besteht darin, dass der Spannbolzen beim Kontakt mit einem Begrenzungselement beim Erreichen des Endanschlagseinen Drehimpuls erfährt, wodurch der Spannbolzen in die Fixierposition gedrängt wird. So kann es vorkommen, dass sich die Begrenzungseinrichtung nach Erreichen der Endlage durch diesen Drehimpuls in einem undefinierten, teilweise fixierten Zustand befindet.

Eine Lenksäule mit den eingangs genannten Merkmalen ist aus der JP 2021 172250 A bekannt.

Angesichts der vorangehend erläuterten Problematik ist es eine Aufgabe der vorliegenden Erfindung, eine kompaktere Bauweise und eine größere konstruktive Freiheit zu ermöglichen. Weiter soll ein potentiell störender Drehimpuls vermieden werden.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Stelleinheit, in der eine Lenkspindel um ihre in Längsrichtung erstreckte Längsachse drehbar gelagert ist und die in einer Trageinheit in Längsrichtung verstellbar aufgenommen ist, und umfassend eine Fixiereinrichtung und eine damit zusammenwirkende Begrenzungseinrichtung, wobei die Fixiereinrichtung einen an der Trageinheit drehbar gelagerten Spannbolzen aufweist, der durch Drehung wahlweise in eine Fixierstellung bringbar ist, in der die Stelleinheit relativ zur Trageinheit fixiert ist, oder in eine Lösestellung, in der die Stelleinheit relativ zur Trageinheit verstellbar ist, wobei die Begrenzungseinrichtung mindestens ein, üblicherweise zwei in Längsrichtung beabstandete Begrenzungselemente aufweist, die mit einem Anschlagabschnitt des Spannbolzens derart zusammenwirken, dass in der Lösestellung der Anschlagabschnitt in eine Begrenzungsposition gebracht ist, in der er in Längsrichtung gegen ein Begrenzungselement anschlagbar ist, und dass in der Fixierstellung der Anschlagabschnitt in eine Durchgangsposition gebracht ist, in der er über die Begrenzungselemente hinaus in Längsrichtung durchgehend verstellbar ist, wobei an der Stelleinheit ein Anschlagträger angebracht ist, der das Begrenzungselement aufweist, ist erfindungsgemäß vorgesehen, dass der Anschlagträger abschnittweise von der Stelleinheit beabstandet ist, wobei der Anschlagabschnitt des Spannbolzens zwischen dem Anschlagträger und der Stelleinheit angeordnet ist.

Im Folgenden wird stets eine Anordnung mit zwei in Längsrichtung beabstandeten Begrenzungselementen beschrieben. Eine Ausführung mit nur einem erfindungsgemäß ausgebildeten Begrenzungselement ist damit ebenfalls umfasst.

Der erfindungsgemäße Anschlagträger weist einen in Längsrichtung langgestreckten, parallel zur Längsachse ausgerichteten Abschnitt auf, der quer dazu, d.h. bezüglich der Längsachse radial nach außen gerichtet, Abstand zur Stelleinheit hat. An diesem beabstandeten Abschnitt des Anschlagträgers sind die Begrenzungselemente derart angeordnet, dass sie in den zwischen dem Anschlagträger und der Stelleinheit gebildeten Zwischenraum vorstehen. Mit anderen Worten stehen die Begrenzungselemente gegen die Stelleinheit gerichtet vor, d.h. bezüglich der Längsachse radial nach innen gerichtet. Der um seine quer zur Längsachse liegende Spannachse relativ zur Trageinheit drehbar gelagerte Spannbolzen ist quer zur Längsachse durch diesen Zwischenraum hindurchgeführt, so dass der Anschlagabschnitt mit den Begrenzungselementen zusammenwirken kann. Dabei sind die Begrenzungselemente erfindungsgemäß bezüglich der Längsachse radial außen bezüglich des Spannbolzens angeordnet.

In der Lösestellung ist der mögliche Verstellweg des Spannbolzens zwischen dem Anschlagträger und der Stelleinheit, und damit die Verstellung der Stelleinheit relativ zur Trageinheit, dadurch begrenzt, dass der dabei in eine Begrenzungsposition gebrachte Anschlagabschnitt gegen die Begrenzungselemente anschlagen kann. In der Fixierstellung kann sich der dann in eine Durchgangsposition gebrachte Spannbolzen in Längsrichtung ungehindert durch den Zwischenraum zwischen dem Anschlagträger und der Stelleinheit bewegen, so dass im Crashfall eine Bewegung der Stelleinheit relativ zur Trageinheit über den regulären, durch die Begrenzungselemente begrenzten Verstellweg hinaus ermöglicht wird.

Ein Vorteil der erfindungsgemäßen Anordnung ist, dass die Begrenzungselemente nicht wie im Stand der Technik direkt außen an der Stelleinheit angeordnet sind, so dass in diesem Bereich anstelle der Begrenzungselemente beispielsweise eine Energieabsorptionseinrichtung untergebracht werden kann. Dadurch werden die konstruktiven Möglichkeiten erweitert, und es wird eine optimierte Anpassung an den zur Verfügung stehenden Bauraum ermöglicht.

Ein weiterer Vorteil ist, dass durch eine einfache Modifikation des Anschlagträgers ohne konstruktive Änderungen der Stelleinheit eine Anpassung des Verstellwegs erfolgen kann.

Es ist weiterhin vorteilhaft, dass beim Anschlag des Anschlagabschnitts gegen den bezüglich der Stelleinheit außen an dem Anschlagträger angeordnetes Begrenzungselement kein den Spannbolzen in die Fixierstellung drängender Drehimpuls eingeleitet wird. Dadurch wird eine undefinierte Zwischenposition, welche zu unerwünschten Klappergeräuschen führen könnte, vermieden, und der Betrieb verbessert.

Zusätzlich zu der oben beschriebenen Anordnung kann vorgesehen sein, dass an einem der Begrenzungselemente ein Dämpfungselement, beispielsweise ein Dämpfungselement aufweisend ein Elastomer, eine Feder oder dergleichen, ausgebildet ist. Auf diese Weise kann die Geräuschentwicklung und die Haptik der Verstellung verbessert werden.

Darüber hinaus ist es vorteilhaft, dass der Spannbolzen in dem Zwischenraum definiert relativ zur Stelleinheit quer zur Längsachse positioniert und in einem losen Formschluss gehalten ist.

Es kann vorteilhaft sein, dass die Begrenzungselemente einstückig mit dem Anschlagträger ausgebildet sind. Beispielsweise können sie als angeformte Vorsprünge ausgebildet sein, oder an dem Anschlagträger kann eine in Längsrichtung erstreckte Einformung ausgebildet sein, deren endseitige Wandungen die Begrenzungselemente aufweisen oder bilden.

Vorzugsweise kann der Anschlagträger als separat gefertigte Komponente bereitgestellt werden, beispielsweise als Guss- oder Sinterteil, welches mit der Stelleinheit verbunden wird, beispielsweise mittels einer lösbaren oder unlösbaren Verbindung.

Vorzugsweise kann vorgesehen sein, dass die Begrenzungselemente von dem Anschlagträger gegen die Stelleinheit gerichtet vorstehen. Die Begrenzungselemente stehen von dem beabstandeten Abschnitt quer zur Längsrichtung radial nach innen, d.h. auf die Längsachse zu, in den Zwischenraum zwischen dem Anschlagträger und der Stelleinheit vor. Dabei weisen sie quer zur Längsachse stehende Anschlagflächen auf. Der Spannbolzen erstreckt sich mit dem Anschlagabschnitt zwischen dem Abschnitt und der Stelleinheit. Dabei ist der Anschlagabschnitt derart ausgebildet, dass der Spannbolzen in der Lösestellung in Längsrichtung gegen die Begrenzungselemente anschlagen kann, und in der Fixierstellung in Längsrichtung an den Begrenzungselementen vorbeibewegt werden kann. Insbesondere ist es vorgesehen, dass der Spannbolzen in der Lösestellung in Crashrichtung (üblicherweise in Fahrtrichtung nach vorne) gegen ein Begrenzungselement anschlagen kann, und in der Fixierstellung in Crashrichtung an einem Begrenzungselement vorbeibewegt werden kann.

In einer vorteilhaften Ausführung kann der Anschlagträger als Anschlagbügel ausgebildet sein. Der Anschlagbügel kann im Wesentlichen L-förmig ausgebildet sein und einen mit der Stelleinheit verbindbaren Verbindungsabschnitt aufweisen, von dem der die Begrenzungselemente aufweisende Abschnitt parallel zur Längsachse vorsteht. Eine derartige Ausführung kann mit geringem Aufwand bereitgestellt werden und ermöglicht eine einfache Montage. Der Anschlagbügel kann ein Metall- oder Kunststoff-Formteil aufweisen, beispielsweise ein Pressteil, ein Guss- oder Sinterteil oder ein Spritzgussteil.

Es ist vorteilhaft, dass der Anschlagabschnitt einen unrunden Querschnitt aufweist. Ein bezüglich der Spannachse unrunder Querschnitt des Spannbolzens kann in der Löseposition mit einem exzentrisch von den Spannbolzen vorstehenden Bereich gegen die Begrenzungselemente anschlagen. Zur Einstellung der Fixierposition kann dieser exzentrische Bereich durch Drehung des Spannbolzens bezüglich des beabstandeten Anschnitts des Anschlagträgers radial nach innen, d.h. auf die Längsachse zu, von den Begrenzungselementen weg verschwenkt werden, so dass der Spannbolzen im Bereich des verringerten Querschnitts die Begrenzungselemente in Längsrichtung ungehindert passieren kann. Auf diese kann die Berenzungseinrichtung konstruktiv einfach und funktionssicher realisiert werden.

Die Realisierung eines unrunden Querschnitts kann vorzugsweise dadurch erfolgen, dass der Anschlagabschnitt eine Abflachung oder einen Vorsprung aufweist. Der Spannbolzen kann in dem Anschlagabschnitt beispielsweise einen zylindrischen Grundquerschnitt mit zumindest einer Abflachung aufweisen, wobei der Grundquerschnitt gegen die Begrenzungselemente anschlagbar ist, und im Bereich der Abflachung der Querschnitt so weit verringert ist, dass die Begrenzungselemente nicht kontaktiert werden. Beispielsweise kann mit einer Abflachung ein im Wesentlichen D-förmiger Querschnitt ausgebildet sein. In der Fixierposition wird die Abflachung durch Drehung des Spannbolzens gegenüber den Begrenzungselementen parallel zur Längsachse ausgerichtet, wodurch der Anschlagabschnitt an den Begrenzungselementen vorbeibewegt werden kann. Zur Einstellung der Löseposition wird die Abflachung von den Begrenzungselementen weggedreht, wodurch der Spannbolzen mit dem relativ größeren Grundquerschnitt gegen die Begrenzungselemente anschlagen kann. Vorteilhaft dabei ist, dass der Anschlagabschnitt mit einer oder mehreren Abflachungen mit geringem Aufwand, bevorzugt einstückig mit dem Spannbolzen, gefertigt werden kann und dabei kompakt und funktionssicher ist.

Alternativ kann ein flächenmässig kleinerer Grundquerschnitt mit mindestens einem von dem Spannbolzen exzentrisch vorstehenden Vorsprung, Nocken oder dergleichen vorgesehen sein, wobei der Grundquerschnitt die Begrenzungselemente in Längsrichtung passieren kann. In der Fixierposition wird der Vorsprung von den Begrenzungselementen weggedreht, so dass der kleinere Grundquerschnitt die Begrenzungselemente passieren kann. In der Löseposition wird der Vorsprung quer zum Anschlagträger ausgerichtet, so dass er gegen die Begrenzungselemente anschlagen kann.

Es kann vorteilhaft sein, dass mit der Trageeinheit ein Abstützelement verbunden ist, das den Anschlagträger formschlüssig zumindest teilweise umgreift. Das Abstützelement ist quer zur Spannachse relativ zum Spannbolzen fixiert und umgreift den Anschlagträger auf einer der Stelleinheit abgewandten Außenseite zumindest teilweise. In Längsrichtung kann der Anschlagträger zur Verstellung und im Crashfall zwischen dem Abstützelement und dem Spannbolzen bewegt werden. Quer zur Längsrichtung wird der Anschlagträger durch das Abstützelement relativ zum Spannbolzen von der Längsachse aus gesehen nach außen von dem Abstützelement formschlüssig abgestützt. Daraus resultiert der Vorteil, dass auf Spannbolzen und/oder den Anschlagträger wirkende hohe Querkräfte, beispielsweise im Crashfall oder durch missbräuchliche Betätigung, sicher abgefangen werden und der Anschlagträger nicht von der Spannachse weg nach außen ausweichen kann. Dadurch ist die Funktion der Begrenzungseinrichtung auch unter extremen Betriebsbedingungen gewährleistet.

Vorteilhafterweise kann zwischen dem Abstützelement und dem Anschlagträger im Normalbetrieb ein definiertes Spiel vorgesehen sein. Auf diese Weise kann eine relative Verstellung der beiden Elemente, welche beim Verstellen der Lenksäule auftreten kann, ohne zusätzliche Reibung oder Geräuschproduktion erfolgen. Wird die Begrenzungseinrichtung hohen Belastungen ausgesetzt, erfolgt eine elastische Verformung der Elemente, insbesondere des Anschlagträgers, welche dann den Formschluss zwischen Anschlagträger und Abstützelement bewirkt.

In einer praktischen Ausführung kann das Abstützelement und die Trageeinheit einstückig ausgebildet sein. Der Spannbolzen kann in dem Abstützelement drehbar gelagert sein, wobei der Abstand des den Anschlagträger abstützenden Bereichs von dem Spannbolzen fixiert ist. Dadurch ist der Anschlagträger quer zum Spannbolzen definiert geführt und abgestützt. Beispielsweise kann das Abstützelement in Form eines Abstützwinkels ausgebildet sein, wobei ein Schenkel den Spannbolzen lagert und ein relativ dazu abgewinkelter anderer Schenkel den Anschlagträger formschlüssig umgreift und abstützt. Dadurch kann ein funktionssicherer und kompakter Aufbau realisiert werden.

Vorzugsweise kann vorgesehen sein, dass die Lenksäule eine Energieabsorptionseinrichtung aufweist. Die Energieabsorptionseinrichtung ist wirkungsmäßig zwischen der Trageinheit und der Stelleinheit angeordnet, bevorzugt zwischen dem Spannbolzen und der Stelleinheit, und weist mindestens ein Energieabsorptionselement auf. Bei einer relativen Bewegung von Stelleinheit und Trageinheit durch eine hohe im Crashfall einwirkende Crashkraft kann die Haltekraft der in Fixierstellung befindlichen Fixiereinrichtung überwunden werden, so dass die Stelleinheit relativ zur Trageinheit bewegt wird, wobei das Energieabsorptionselement durch plastische Verformung und/oder Reibung kinetische Energie absorbiert und die Bewegung der Stelleinheit relativ zur Trageinheit kontrolliert abbremst. Als Energieabsorptionselemente sind beispielsweise Biege- oder Reißelemente, zerspanbare Elemente oder dergleichen bekannt. Ein Vorteil der Erfindung ist, dass ein derartiges Energieabsorptionselement zwischen dem Spannbolzen und der Stelleinheit an einer Stelle angeordnet werden kann, wo im Stand der Technik die Begrenzungselemente angeordnet sind. Dadurch können die konstruktiven Möglichkeiten erweitert werden.

Es kann vorteilhaft sein, dass der Spannbolzen mit der Energieabsorptionseinrichtung derart wirkverbunden ist, dass mindestens ein Energieabsorptionselement in der Fixierstellung eingekoppelt und in der Lösestellung ausgekoppelt ist. Durch Betätigung des Spannbolzens kann wahlweise ein Energieabsorptionselement eingekoppelt oder ausgekoppelt werden, wodurch die Energieabsorptionseinrichtung entsprechend aktiviert oder deaktiviert wird. In der Fixierstellung ist die Energieabsorptionsvorrichtung aktiviert und das Energieabsorptionselement kann im Crashfall Energie absorbieren. In der Lösestellung in das Energieabsorptionselement ausgekoppelt und dadurch deaktiviert, so dass eine Verstellung der Lenksäule ohne Krafteinwirkung auf das Energieabsorptionselement ermöglicht ist.

Eine vorgenannte Ausführungsform kann dadurch realisiert sein, dass mit dem Spannbolzen ein Arretierelement wirkverbunden ist, welches in Fixierstellung in Eingriff bringbar ist mit einem an der Stelleinheit angebrachten Eingriffselement, wobei mindestens ein Energieabsorptionselement zwischen dem Spannbolzen und dem Arretierelement und/oder zwischen dem Eingriffselement und der Stelleinheit angeordnet ist. In der Lösestellung ist das Arretierelement außer Eingriff, so dass das die Stelleinheit mit dem Eingriffselement relativ zur Trageinheit bewegt und verstellt werden kann, ohne dass dabei eine Kraft auf das Energieabsorptionselement ausgeübt werden kann. In der Fixierstellung ist das Energieabsorptionselement durch das in das Eingriffselement eingreifende Arretierelement eingekoppelt, so dass es bei einer relativen Bewegung von Stelleinheit und Trageinheit im Crashfall unter Energieabsorption plastisch deformiert wird.

Das Arretierelement kann bevorzugt ein Formschlusselement aufweisen, beispielsweise einen Sperrhaken, einen Zahnstein oder dergleichen, der in der Fixierstellung in ein korrespondierendes Gegenformschlusselement des Eingriffselements an der Stelleinheit eingreift, zur Bildung eines in Verstellrichtung wirksamen Formschlusses. Dabei ist das Arretierelement derart mit dem Spannbolzen wirkverbunden, dass es bei einer Drehung des Spannbolzens aus der Fixierstellung in die Lösestellung aus dem Eingriff mit dem Eingriffselement gelöst wird. In der Lösestellung ist die Stelleinheit innerhalb des durch die Begrenzungselemente begrenzten Verstellwegs relativ zur Trageinheit verstellbar. Durch eine umgekehrte Drehung des Spannbolzens aus der Lösestellung in die Fixierstellung wird die Stelleinheit relativ zur Trageinheit verspannt, und das Arretierelement wird in Eingriff mit dem Eingriffselement gebracht. Dadurch ist das Energieabsorptionselement zur Energieabsorption im Crashfall aktiviert.

Das Arretierelement kann beispielsweise einen an dem Spannbolzen angebrachten Sperrhaken aufweisen, der durch Drehung des Spannbolzens mit einer Zahnplatte oder dergleichen des Eingriffselements zur Bildung eines in Längsrichtung wirksamen Formschlusses in Eingriff gebracht werden kann.

Zweckmäßigerweise ist vorgesehen, dass der Spannbolzen mit einer Spanneinrichtung zusammenwirkt. Die Spanneinrichtung ist ausgebildet, eine Drehung des Spannbolzens in einen Klemmhub umzusetzen. Der Klemmhub wirkt auf die Trageinrichtung, um die Stelleinheit mit der Trageinheit lösbar zu verspannen. Zur Erzeugung des Klemmhubs kann der Spannbolzen mit einem Hubmechanismus zusammenwirken, der in an sich bekannter Weise ein Gewinde, Keilscheiben, Kippstifte oder dergleichen aufweisen kann. Die Betätigung kann manuell über einen an dem Spannbolzen angebrachten Spannhebel erfolgen. Alternativ kann auch ein motorischer Drehantrieb vorgesehen sein.

In einer besonders bevorzugten Ausführungsform kann vorgesehen sein, dass die Begrenzungseinrichtung nur in Crashrichtung, also in der in Fahrtrichtung nach vorne weisenden Längsrichtung, mit dem Spannbolzen und Anschlagträger wie oben beschrieben ausgebildet ist. In der umgekehrten Längsrichtng, also entgegen der Fahrtrichtung nach hinten, kann vorgesehen sein, einen fixen Anschlag auszubilden, welcher die Bewegung unabhängig von der Rotationslage des Spannbolzens begrenzt. Diese Anordnung ist im Falle eines Heckaufpralls, also wenn eine hohe, abrupte Impulsübertragung auf das Fahrzeug von hinten erfolgt, besonders vorteilhaft, weil so die aufgrund der Massenträgheit der Lenksäule erfolgende Distanzreduktion zwischen Fahrer und Lenksäule begrenzt werden kann.

Alternativ hierzu kann in einer Ausführungsform vorgesehen sein, dass die Begrenzungseinrichtung in beide Richtungen, also in Fahrtrichtung nach vorne und nach hinten mit dem Spannbolzen und Anschlagträger wie oben beschrieben ausgebildet ist und zusätzlich eine Begrenzungseinrichtung ausgebildet ist, welche die Bewegung in Fahrtrichtung nach hinten unabhängig von der Stellung des Spannbolzens begrenzt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine weitere Ansicht der Lenksäule gemäß Figur 1,
- Figur 3: eine vergrößerte Detailansicht von Figur 2,
- Figur 4: eine schematisch freigestellte Teilansicht der Trageinheit der Lenksäule gemäß Figur 1,
- Figur 5: eine weitere schematisch freigestellte Teilansicht der Trageineinheit der Lenksäule gemäß Figur 1,
- Figur 6: eine schematische Seitenansicht der Begrenzungseinrichtung der Lenksäule gemäß Figur 1 in Lösestellung der Fixiereinrichtung,
- Figur 7: eine Ansicht wie in Figur 6 in Fixierstellung der Fixiereinrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

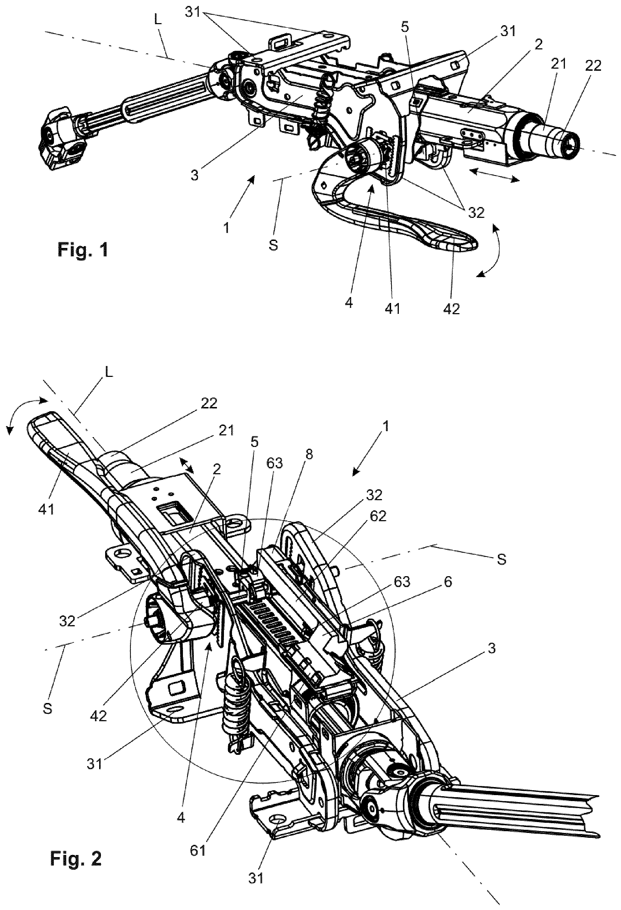

Figuren 1 und 2 zeigen eine erfindungsgemäße Lenksäule 1 in unterschiedlichen perspektivischen Darstellungen 1, nämlich in Figur 1 schräg von links oben nach vorn in Einbaulage in Fahrtrichtung, und Figur 2 schräg von unten nach hinten entgegen der Fahrtrichtung.

Die Lenksäule 1 weist eine Stelleinheit 2 auf, in der eine Lenkspindel 21 um eine in Längsrichtung erstreckte Längsachse L drehbar gelagert ist. Die Lenkspindel 21 weist an ihrem hinteren Ende einen Befestigungsabschnitt 22 zur Anbringung eines hier nicht dargestellten Lenkrads auf.

Die Stelleinheit 2 ist in einer Trageinheit 3 in Längsrichtung verstellbar aufgenommen, wie mit dem Doppelpfeil angedeutet ist. Die Trageinheit 3 weist Befestigungsmittel 31, beispielsweise Befestigungsöffnungen, auf zur Anbringung der Lenksäule 1 an einer nicht dargestellten Fahrzeugkarosserie.

Die Stelleinheit 2 ist zwischen zwei nach unten gerichteten Seitenwangen 32 der Trageinheit 3 aufgenommen.

Eine Fixiereinrichtung 4 weist einen Spannbolzen 5 auf, der um eine quer zur Längsachse L liegende Spannachse S drehbar an der Trageinheit 3 gelagert ist und die beiden Seitenwangen 32 durchsetzt. An dem Spannbolzen 5 ist ein Spannhebel 41 angebracht, um eine manuelle Drehung des Spannbolzens zu ermöglichen, wie mit dem gerundeten Pfeil angedeutet ist.

Der Spannbolzen 5 wird mit einem Hubmechanismus 42 zusammen, der in an sich bekannter Weise ein Gewinde, eine Keilscheiben- oder Kippstiftanordnung oder dergleichen aufweisen kann. Der Hubmechanismus 42 und der Spannbolzen 5 stützen sich von außen an den beiden Seitenwangen 32 ab, so dass diese gegeneinander bewegt werden, wenn die Fixiereinrichtung durch manuelle Drehung des Spannbolzens 5 in die Fixierstellung gebracht wird. Dabei wird die Stelleinheit 2 kraftschlüssig zwischen den Seitenwangen 32 verspannt und ist relativ zur Trageinheit 3 fixiert. Durch eine entgegengesetzte Drehung des Spannbolzens 5 kann die Fixiereinrichtung 5 in eine Lösestellung gebracht werden, wobei die Verspannung aufgehoben ist, so dass die Stelleinheit 2 freigegeben wird und in Längsrichtung verstellt werden kann.

An der Stelleinheit 2 ist ein erfindungsgemäßer Anschlagträger 6 befestigt. Dieser ist als L-förmiger Anschlagbügel ausgebildet und weist einen mit der Stelleinheit 2 verbindbaren Verbindungsabschnitt 61 auf, von dem sich ein parallel zur Längsachse L langgestreckter Abschnitt 81 absteht, der quer zur Längsrichtung, d.h. radial bezüglich der Längsachse L von der Stelleinheit 2 beanstandet ist. Wie in Figur 2 erkennbar ist, ist der Spannbolzen 5 zwischen dem beabstandeten Abschnitt 62 und der Stelleinheit 2 hindurchgeführt, oder anders ausgedrückt in dem radialen Zwischenraum zwischen dem Anschlagträger 6 und der Stelleinheit 2 angeordnet.

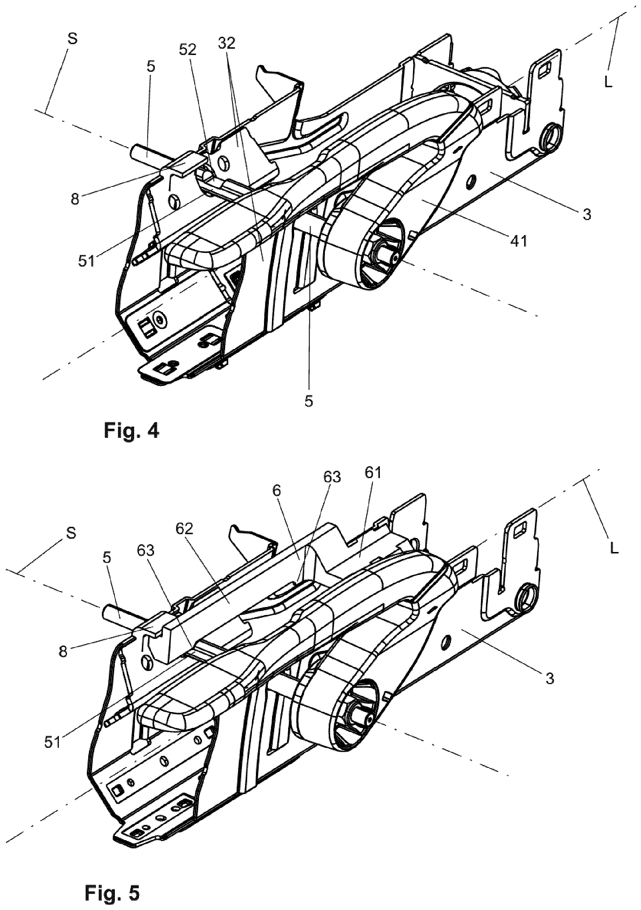

Die Anordnung des Spannbolzens 5 relativ zur Trageinheit 3 ist in Figur 4 schematisch gezeigt, wobei zur besseren Übersicht die übrigen Bauteile weggelassen sind. Figur 5 zeigt dieselbe Ansicht, wobei zusätzlich der Anschlagträger 6 in seiner Orientierung relativ zum Spannbolzen 5 dargestellt ist.

In Figur 4 ist erkennbar, dass der Spannbolzen 5 einen unrunden Anschlagabschnitt 51 aufweist, der eine Abflachung 52 eines zylindrischen Grundquerschnitts aufweist. Dadurch wird dort ein im Wesentlichen D-förmiger Querschnitt ausgebildet.

Wie sich aus Figur 5 ergibt, ist der beabstandete Abschnitt 62 des Anschlagträgers 6 im Bereich des Anschlagabschnitts 51 radial außen bezüglich des Spannbolzens 5 angeordnet.

An dem Anschlagträger 6 sind zwei Begrenzungselemente 63 angeordnet, die von dem beabstandeten Abschnitt 62 radial nach innen auf die Längsachse L zu gerichtet vorstehen, d.h. in den besagten Zwischenraum zwischen Anschlagträger 6 und Stelleinheit 2 2 gegen die Außenseite der Stelleinheit 2 gerichtet sind.

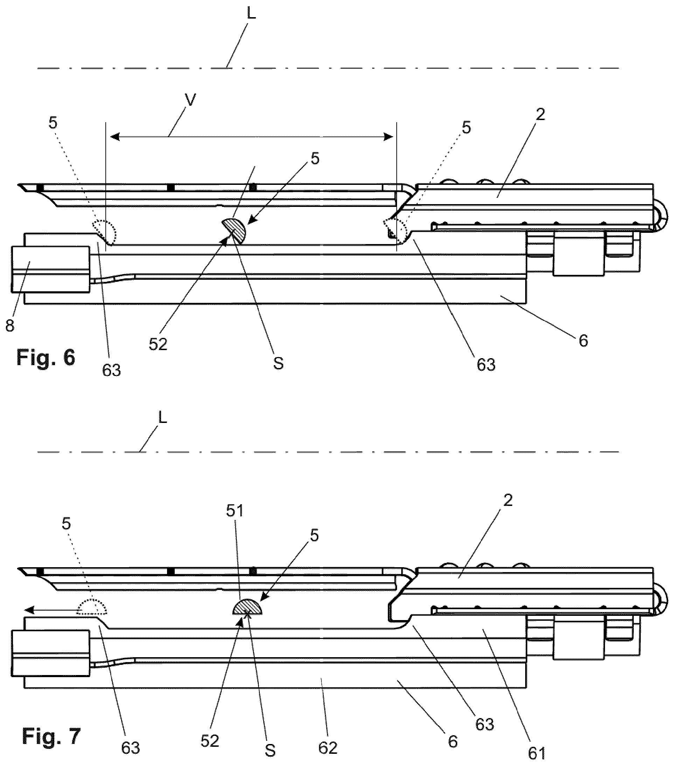

Zur Verdeutlichung der Funktion der durch den Spannbolzen 5 zusammen mit dem Anschlagträger 5 gebildeten Begrenzungseinrichtung ist in Figur 6 in einer schematischen Seitenansicht quer zur Längsachse L die Lösestellung der Fixiereinrichtung 4 gezeigt, und in Figur 6 in derselben Ansicht die Lösestellung.

In den Figuren 6 und 7 ist deutlich erkennbar, wie der Anschlagabschnitt 51 in dem Zwischenraum zwischen dem Anschlagträger 6 und der Stelleinheit 2 angeordnet ist. Dabei ist der Abschnitt 62 des Anschlagträgers 6 von der Längsachse L aus gesehen radial außen bezüglich des Spannbolzens 5 angeordnet.

Figur 6 zeigt die Löseposition. Dabei steht die Abflachung 52 quer zur Längsachse L. Der Grundquerschnitt in dem Anschlagabschnitt 51 ist derart bemessen, dass der Spannbolzen 5 in Längsrichtung gegen die vorstehenden Begrenzungselemente 63 anschlagen kann, wie mit den gestrichelt eingezeichneten Positionierungen des Spannbolzens 5 angedeutet ist. Dadurch wird in Längsrichtung ein Verstellweg V begrenzt, im den die Stelleinheit 2 mit dem Anschlagträger 6 relativ zum Spannbolzen 6 und damit relativ zur Trageinheit 3 verstellbar ist.

In Figur 7 ist die Fixierposition dargestellt. Dabei ist die Abflachung 52 durch Drehung des Spannbolzens 5 parallel zur Längsachse L und damit parallel zum Abschnitt 62 des Anschlagträgers 6 ausgerichtet. Dadurch kann der Spannbolzen 5 in Längsrichtung an einem Begrenzungselement 63 vorbeibewegt werden, wie links in der Zeichnung gestrichelt eingezeichnet ist. Auf diese Weise wird im Crashfall eine über den Verstellweg V hinausgehende relative Bewegung von Stelleinheit 2 und Trageinheit 3 ermöglicht, so dass ein entsprechend längerer Crashweg zur Verfügung steht.

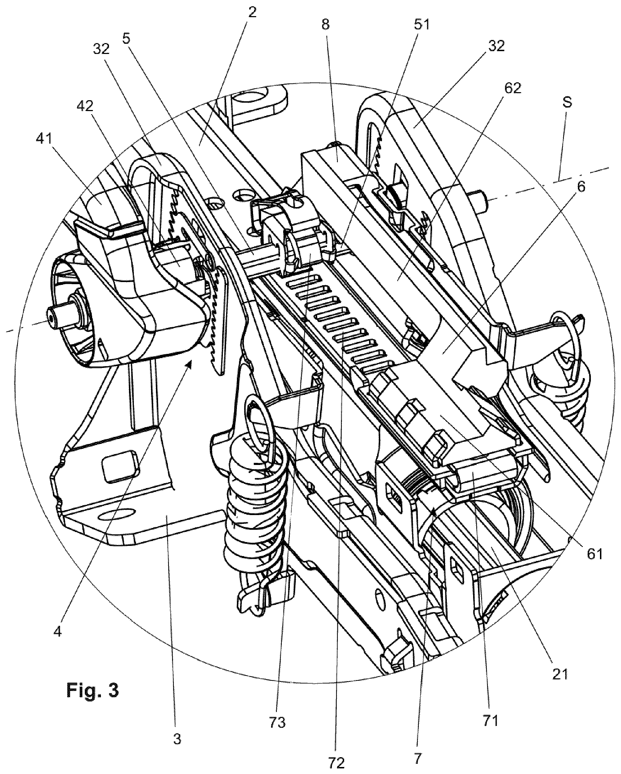

Zur Energieabsorption im Crashfall kann eine Energieabsorptionseinrichtung 7 vorgesehen sein, die in Figur 3 gezeigt ist. Diese weist ein Energieabsorptionselement 71 auf. Beispielsweise einen Biegestreifen oder dergleichen. Dieses Energieabsorptionselement 71 ist an einem Ende mit der Stelleinheit 2 verbunden, und an seinem anderen Ende mit einem Eingriffselement 72. Dieses Eingriffselement 72 kann wie gezeigt eine Zahnplatte mit quer zur Längsrichtung verlaufenden Zähnen aufweisen. Als korrespondierendes Arretierelement 73 ist an dem Spannbolzen 5 ein Sperrhaken angebracht. Dieser kann durch Drehung des Spannbolzens 5 aus der in Figur 5 gezeigten Lösestellung in die Fixierstellung gebracht werden, wobei er zur Bildung eines in Längsrichtung wirksamen Formschlusses in die Verzahnung des Eingriffselements 72 eingreift. Dadurch ist in der Fixierstellung das Energieabsorptionselement 71 zwischen der Trageinheit 3 und der Stelleinheit 2 eingekoppelt, so dass die Energieabsorptionseinrichtung 7 aktiviert ist. Im Crashfall wird in der Fixierstellung das Energieabsorptionselement unter Absorption kinetischer Energie zur kontrollierten Abbremsung der Stelleinheit 2 plastisch deformiert.

In der in Figur 5 gezeigten Lösestellung ist das Arretierelement 73 außer Eingriff mit dem Eingriffselement 72, so dass Energieabsorptionseinrichtung 7 deaktiviert ist und die Stelleinheit 2 innerhalb des Verstellbereichs V ohne Krafteiwirkung auf das Energieabsorptionselement 71 relativ zur Trageinheit 3 verstellt werden kann.

Ein Abstützelement 8 in Form eines Abstützwinkels, umgreift den Anschlagträger 6 in einem losen Formschluss, wie in den Figuren 2, 5 und 8 erkennbar ist. Dadurch kann der Anschlagträger 6 in Längsrichtung hindurchbewegt werden, und ist quer dazu relativ zum Spannbolzen 5 abgestützt.

### Bezugszeichenliste

- 1: Lenksäule
- 2: Stelleinheit
- 21: Lenkspindel
- 22: Befestigungsabschnitt
- 3: Trageinheit
- 31: Befestigungsmittel
- 32: Seitenwangen
- 4: Fixiereinrichtung
- 41: Spannhebel
- 42: Hubmechanismus
- 5: Spannbolzen
- 51: Anschlagabschnitt
- 52: Abflachung
- 6: Anschlagträger
- 61: Verbindungsabschnitt
- 62: Abschnitt
- 63: Begrenzungselement
- 7: Energieabsorptionseinrichtung
- 71: Energieabsorptionselement
- 72: Eingriffselement
- 73: Arretierelement
- 8: Abstützelement
- L: Längsachse
- S: Spannachse

## Patentansprüche

1. Lenksäule (1) für ein Kraftfahrzeug, umfassend eine Stelleinheit (2), in der eine Lenkspindel (21) um ihre in Längsrichtung erstreckte Längsachse (L) drehbar gelagert ist und die in einer Trageinheit (3) in Längsrichtung verstellbar aufgenommen ist, und umfassend eine Fixiereinrichtung (4) und eine damit zusammenwirkende Begrenzungseinrichtung,
wobei die Fixiereinrichtung (4) einen an der Trageinheit (3) drehbar gelagerten Spannbolzen (5) aufweist, der durch Drehung wahlweise in eine Fixierstellung bringbar ist, in der die Stelleinheit (2) relativ zur Trageinheit (3) fixiert ist, oder in eine Lösestellung, in der die Stelleinheit (2) relativ zur Trageinheit (3) verstellbar ist,
wobei die Begrenzungseinrichtung mindestens ein Begrenzungselement (63) aufweist, das mit einem Anschlagabschnitt (51) des Spannbolzens (5) derart zusammenwirkt, dass in der Lösestellung der Anschlagabschnitt (51) in eine Begrenzungsposition gebracht ist, in der er in Längsrichtung gegen ein Begrenzungselement (63) anschlagbar ist, und dass in der Fixierstellung der Anschlagabschnitt (51) in eine Durchgangsposition gebracht ist, in der er über das Begrenzungselement (63) hinaus in Längsrichtung durchgehend verstellbar ist,
wobei an der Stelleinheit (2) ein Anschlagträger (6) angebracht ist, der das Begrenzungselement (63) aufweist,
**dadurch gekennzeichnet,**
**dass** der Anschlagträger (6) abschnittweise von der Stelleinheit (2) beabstandet ist, wobei der Anschlagabschnitt (51) des Spannbolzens (5) zwischen dem Anschlagträger (6) und der Stelleinheit (2) angeordnet ist.

2. Lenksäule nach Anspruch 1, **dadurch gekennzeichnet, dass** das Begrenzungselement (63) von dem Anschlagträger (6) gegen die Stelleinheit (2) gerichtet vorsteht.

3. Lenksäule nach einem der vorangehenden Ansprüche, **dadurch gekennzeichnet, dass** der Anschlagträger (6) als Anschlagbügel ausgebildet ist.

4. Lenksäule nach einem der vorangehenden Ansprüche, **dadurch gekennzeichnet, dass** der Anschlagabschnitt (51) einen unrunden Querschnitt aufweist.

5. Lenksäule nach Anspruch 4, **dadurch gekennzeichnet, dass** der Anschlagabschnitt (51) eine Abflachung (52) oder einen Vorsprung aufweist.

6. Lenksäule nach einem der vorangehenden Ansprüche, **dadurch gekennzeichnet, dass** mit der Trageinheit (6) ein Abstützelement (8) verbunden ist, das den Anschlagträger (6) formschlüssig umgreift.

7. Lenksäule nach einem der vorangehenden Ansprüche, **dadurch gekennzeichnet, dass** sie eine Energieabsorptionseinrichtung (7) aufweist.

8. Lenksäule nach Anspruch 7, **dadurch gekennzeichnet, dass** der Spannbolzen (5) mit der Energieabsorptionseinrichtung (7) derart wirkverbunden ist, dass mindestens ein Energieabsorptionselement (71) in der Fixierstellung eingekoppelt und in der Lösestellung ausgekoppelt ist.

9. Lenksäule nach Anspruch 8, **dadurch gekennzeichnet, dass** mit dem Spannbolzen (5) ein Arretierelement (73) wirkverbunden ist, welches in Fixierstellung in Eingriff bringbar ist mit einem an der Stelleinheit (2) angebrachten Eingriffselement (72), wobei mindestens ein Energieabsorptionselement (71) zwischen dem Spannbolzen (5) und dem Arretierelement (73) und/oder zwischen dem Eingriffselement (72) und der Stelleinheit (2) angeordnet ist.

10. Lenksäule nach einem der vorangehenden Ansprüche, **dadurch gekennzeichnet, dass** der Spannbolzen (5) mit einer Spanneinrichtung (42) zusammenwirkt.

## Claims

1. Steering column (1) for a motor vehicle, comprising an adjusting unit (2) in which a steering spindle (21) is mounted rotatably about its longitudinal axis (L) extending in the longitudinal direction and which is accommodated adjustably in the longitudinal direction in a support unit (3), and
comprising a fixing device (4) and a limiting device cooperating therewith,
wherein the fixing device (4) has a clamping bolt (5) which is rotatably mounted on the support unit (3) and which can be brought by rotation either into a fixing position, in which the adjusting unit (2) is fixed relative to the support unit (3), or into a releasing position, in which the adjusting unit (2) can be adjusted relative to the support unit (3), wherein the limiting device has at least one limiting element (63) which interacts with a stop section (51) of the clamping bolt (5) in such a way
that in the release position, the stop portion (51) is brought into a limiting position in which it can abut against a limiting element (63) in the longitudinal direction, and that in the fixing position, the stop portion (51) is brought into a through position in which it can be continuously adjusted in the longitudinal direction beyond the limiting element (63), wherein a stop carrier (6), which has the limiting element (63), is attached to the adjusting unit (2),
**characterized in**
**in that** the stop carrier (6) is spaced apart from the adjusting unit (2) in sections, the stop section (51) of the clamping bolt (5) being arranged between the stop carrier (6) and the adjusting unit (2).

2. Steering column according to claim 1, **characterized in that** the limiting element (63) projects from the stop carrier (6) towards the actuator unit (2).

3. Steering column according to one of the preceding claims, **characterized in that** the stop carrier (6) is designed as a stop bracket.

4. Steering column according to one of the preceding claims, **characterized in that** the stop section (51) has a non-circular cross-section.

5. Steering column according to claim 4, **characterized in that** the stop section (51) has a flattened portion (52) or a projection.

6. Steering column according to one of the preceding claims, **characterized in that** a support element (8) is connected to the support unit (6) and engages positively around the stop carrier (6).

7. Steering column according to one of the preceding claims, **characterized in that** it has an energy absorption device (7).

8. Steering column according to claim 7, **characterized in that** the clamping bolt (5) is operatively connected to the energy absorption device (7) in such a way that at least one energy absorption element (71) is coupled in in the fixing position and decoupled in the release position.

9. Steering column according to claim 8, **characterized in that** a locking element (73) is operatively connected to the clamping bolt (5) and can be brought into engagement in the fixing position with an engagement element (72) attached to the adjusting unit (2), at least one energy absorption element (71) being arranged between the clamping bolt (5) and the locking element (73) and/or between the engagement element (72) and the adjusting unit (2).

10. Steering column according to one of the preceding claims, **characterized in that** the tensioning bolt (5) interacts with a tensioning device (42).

## Revendications

1. Colonne de direction (1) pour un véhicule automobile, comprenant une unité de réglage (2) dans laquelle un arbre de direction (21) est logé de manière à pouvoir tourner autour de son axe longitudinal (L) s'étendant dans le sens de la longueur et qui est logé dans une unité de support (3) de manière à pouvoir être réglé dans le sens de la longueur, et un dispositif de réglage de la direction (2).
comprenant un dispositif de fixation (4) et un dispositif de limitation coopérant avec celui-ci,
le dispositif de fixation (4) présentant un boulon de serrage (5) logé de manière rotative sur l'unité de support (3), qui peut être amené par rotation au choix dans une position de fixation, dans laquelle l'unité de réglage (2) est fixée par rapport à l'unité de support (3), ou dans une position de libération, dans laquelle l'unité de réglage (2) est réglable par rapport à l'unité de support (3),
le dispositif de limitation présentant au moins un élément de limitation (63) qui coopère avec une section de butée (51) du boulon de serrage (5) de telle sorte,
en ce que, dans la position de desserrage, la section de butée (51) est amenée dans une position de limitation dans laquelle elle peut buter dans la direction longitudinale contre un élément de limitation (63), et en ce que, dans la position de fixation, la section de butée (51) est amenée dans une position de passage dans laquelle elle peut être déplacée de façon continue dans la direction longitudinale au-delà de l'élément de limitation (63),
un support de butée (6), qui présente l'élément de limitation (63), étant monté sur l'unité de réglage (2),
**caractérisé en ce que**
**en ce que** le support de butée (6) est espacé par sections de l'unité de réglage (2), la section de butée (51) du boulon de serrage (5) étant disposée entre le support de butée (6) et l'unité de réglage (2).

2. Colonne de direction selon la revendication 1, **caractérisée en ce que** l'élément de limitation (63) fait saillie du support de butée (6) en direction de l'unité de réglage (2).

3. Colonne de direction selon l'une des revendications précédentes, **caractérisée en ce que** le support de butée (6) est conçu comme un étrier de butée.

4. Colonne de direction selon l'une des revendications précédentes, **caractérisée en ce que** la portion de butée (51) présente une section transversale non circulaire.

5. Colonne de direction selon la revendication 4, **caractérisée en ce que** la section de butée (51) présente un méplat (52) ou une saillie.

6. Colonne de direction selon l'une des revendications précédentes, **caractérisée en ce qu'**un élément d'appui (8) est relié à l'unité de support (6) et entoure le support de butée (6) par complémentarité de forme.

7. Colonne de direction selon l'une des revendications précédentes, **caractérisée en ce qu'**elle comporte un dispositif d'absorption d'énergie (7).

8. Colonne de direction selon la revendication 7, **caractérisée en ce que** le boulon de serrage (5) est en liaison active avec le dispositif d'absorption d'énergie (7) de telle sorte qu'au moins un élément d'absorption d'énergie (71) est couplé dans la position de fixation et découplé dans la position de libération.

9. Colonne de direction selon la revendication 8, **caractérisée en ce qu'**un élément d'arrêt (73) est relié fonctionnellement au boulon de serrage (5), lequel élément d'arrêt peut être amené en prise avec un élément de prise (72) monté sur l'unité de réglage (2) dans la position de fixation, au moins un élément d'absorption d'énergie (71) étant disposé entre le boulon de serrage (5) et l'élément d'arrêt (73) et/ou entre l'élément de prise (72) et l'unité de réglage (2).

10. Colonne de direction selon l'une des revendications précédentes, **caractérisée en ce que** le boulon de serrage (5) coopère avec un dispositif de serrage (42).
